# NEUE EUROPÄISCHE PATENTSCHRIFT

(11) **EP 0 303 801 B2**
(45) Veröffentlichungstag und Bekanntmachung des Hinweises auf die Entscheidung über den Einspruch: **12.02.1997**
(45) Hinweis auf die Patenterteilung: 27.10.1993
(21) Anmeldenummer: 88110035.8
(22) Anmeldetag: 23.06.1988
(51) Int. Cl.: F16K 31/04

(54) **Absperrarmatur**
Valve
Clapet de fermeture

(30) Priorität: 10.08.1987 DE 3726581
(43) Veröffentlichungstag der Anmeldung: 22.02.1989
(73) Patentinhaber: SIEMENS AKTIENGESELLSCHAFT, 80333 München (DE)
(72) Erfinder: Holtfoth, Peter, D-8520 Erlangen (DE); Zill, Heinrich, D-8521 Weisendorf (DE)

(56) Entgegenhaltungen:
- CH-A- 383 717
- DE-A- 2 141 519
- DE-B- 1 167 431
- DE-B- 1 185 031
- FR-A- 1 148 679
- FR-E- 70 879
- SE-A- 8 206 053
- US-A- 2 948 839
- "Maschinenelemente" von Dr. Ing. G. Niemann, Erster Band, 5. berichtigter Neudruck, 1961, Seiten 158-162.
- Dubbels Taschenbuch für den Maschinenbau, 1953
- Zeitschrift "Messen und Prüfen", Sept.1978, Seiten 493,526,529-536,544

## Beschreibung

Die Erfindung betrifft eine Absperrarmatur mit einer Antriebsvorrichtung und mit einer mit einem Gewinde versehenen Spindel, an die ein auf einen Sitz aufsetzbarer Armaturenteller angeformt ist, wobei eine Spindelmutter mit der Spindel in Eingriff steht und die Antriebsvorrichtung mit der Spindelmutter unmittelbar in Verbindung stehend angeordnet ist.

Absperrarmaturen sind allgemein bekannt. Sie sind in der Regel mit einer Antriebsvorrichtung verbunden. Eine bekannte Antriebsvorrichtung, die als Stellantrieb einer Armatur dient, weist einen Elektromotor auf, der über ein Getriebe eine Antriebsbuchse, beispielsweise eine Welle, antreibt. Die Antriebsbuchse steht ihrerseits mit der Spindelmutter der Armatur in Eingriff und versetzt diese in Rotationsbewegung. Die Umsetzung der Rotationsbewegung in eine Axialbewegung der Spindel und damit des Armaturentellers erfolgt durch ein Gewinde an der Spindel und an der Spindelmutter.

Die Kombination aus Antriebsvorrichtung, Antriebsbuchse, Spindelmutter, Spindel und Armaturenteller benötigt viel Raum. Besonders in Kraftwerken, wo sehr viele Armaturen installiert sind, macht die Unterbringung der Armaturen aufwendige Konstruktionen notwendig.

Aus der DE-B-1 185 031 ist ein Antrieb für Ventile bekannt, wobei mit der Spindel des Verschlußstückes ein Schneckenrad verbunden ist, das mit einer motorisch angetriebenen Schneckenspindel in Eingriff steht.

Der Wirkungsgrad der bekannten Umsetzung von einer Drehbewegung in eine Axialbewegung liegt unter 50 % , in der Regel sogar nur zwischen 25 % und 35 % . Der Gesamtwirkungsgrad einer bekannten Kombination aus Antriebsvorrichtung und Absperrarmatur, verbunden durch eine Antriebsbuchse liegt sogar nur zwischen 10 % und 25 % . Das macht eine sehr hohe Leistung eines Elektromotores in der Antriebsvorrichtung notwendig. Bei der Ermittlung der benötigten Antriebsleistung ist stets zu berücksichtigen, daß der sehr große Anteil von 65 % bis 75 % der gesamten Antriebsleistung infolge von Reibung nicht nutzbringend zu verwenden ist.

Darüber hinaus ist der Anteil der Reibung während des Betriebes der Armatur Änderungen unterworfen, die durch unterschiedliche Temperaturen bedingt sind oder beispielsweise nach längeren Stillstandsphasen auf Verschmutzungen zurückzuführen sind. Die Schwankungen der Reibung haben einen großen Einfluß auf die Stellkraft der Armatur.

Der Erfindung lag die Aufgabe zugrunde, eine Absperrarmatur zu entwickeln, die wenig Platz beansprucht, die außerdem wegen geringer Reibungsverluste mit relativ kleiner Leistung des Elektromotors einen guten Gesamtwirkungsgrad erzielt und die durch einen geringen Reibungsanteil eindeutig bestimmbare Stellkräfte ermöglicht.

Die Aufgabe wird gemäß der Erfindung durch die Merkmale des Anspruchs 1 gelöst.

Dadurch, daß das Gewinde der Spindel keine Selbsthemmung aufweist, wird ein hoher Gesamtwirkungsgrad erzielt. Das ist darauf zurückzuführen, daß der Anteil der Reibung an der erforderlichen Antriebsleistung gering ist.

Die Minimierung des Reibungsanteils bei der Umsetzung von einer Drehbewegung in eine Axialbewegung hat aber zur Folge, daß ein selbsttätiges Bewegen der Spindel nicht mehr stets auszuschließen ist. Es ist daher gemäß der Erfindung an der Antriebsvorrichtung eine Bremse zur Verhinderung eines selbsttätigen Bewegens der Spindel vorhanden.

Mit der Absperrarmatur nach der Erfindung wird der Vorteil erzielt, daß das Gewinde der Spindel aufgrund der fehlenden Selbsthemmung nur wenig Reibung verursacht und trotzdem aufgrund der vorhandenen Bremse durch das strömende Medium nicht bewegt werden kann. Man erzielt mit der Absperrarmatur nach der Erfindung einen hohen Gesamtwirkungsgrad, so daß man mit einer vergleichsweise kleinen Antriebsvorrichtung auskommt. Die Absperrarmatur nach der Erfindung benötigt daher wenig Raum.

Mit der Absperrarmatur nach der Erfindung liegt eine Armatur vor, die Antriebsvorrichtung und Absperrvorrichtung zu einem System vereinigt. Durch diese Vereinigung sind die Anzahl der benötigten Bauteile und die Bauhöhe der Absperrarmatur nach der Erfindung erheblich geringer als bei den meisten bekannten Armaturen mit gleicher Nennweite. Gemäß der Erfindung konstruierte Absperrarmaturen sind besonders vorteilhaft in Kraftwerken einsetzbar, da dort nur wenig Raum zur Verfügung steht.

Beispielsweise weist das Gewinde der Spindel eine große Steigung auf, die größer als 5° ist. Mit einer derartigen Gewindesteigung ist gewährleistet, daß das Gewinde keine Selbsthemmung aufweist. Bedingt durch die Übersetzung des relativ steilen Gewindes der Spindel ist der Anteil der Reibung an der erforderlichen Antriebsleistung gering. Das hat eine Steigerung des Gesamtwirkungsgrades zur Folge.

Eine Bremse an der Antriebsvorrichtung besteht beispielsweise aus einem Zahnrad, das mit der Spindelmutter in Verbindung steht und aus einer zwischen Zähne des Zahnrades eingreifend angeordneten Klinke, wobei diese Klinke gegen eine Rückstellkraft nur in einem festgelegten Drehsinn durch das Zahnrad auslenkbar ist.

Mit dem geschilderten Aufbau einer Bremse wird der Vorteil erzielt, daß in einem festgelegten Drehsinn das Zahnrad und damit die Spindel selbst bei wirksamer Bremse zu bewegen sind. Im gegenläufigen Drehsinn wirkt die Bremse und eine Bewegung der Spindel ist unmöglich. Die Bremse ist vorteilhaft nur für Bewegungen in einer festgelegten Drehrichtung wirksam.

Durch den Aufbau des Spindelgewindes bedingte selbsttätige Bewegungen der Spindel werden mit der Bremse verhindert, ohne daß entgegengerichtete gewünschte Spindelbewegungen behindert werden.

Beispielsweise ist die Klinke so ausgebildet, daß sie in der gewünschten Richtung nur durch eine Kraft, die einen festgelegten Wert überschreitet, auslenkbar ist. Das kann durch eine Rückstellfeder bewirkt sein. Hiermit wird der Vorteil erzielt, daß auch in der gewünschten Bewegungsrichtung die angreifende Kraft einen Schwellenwert überschreiten muß. Dadurch werden auch in dieser Richtung selbsttätige Bewegungen weitgehend vermieden.

Zur weiteren Steigerung des Gesamtwirkungsgrades ist beispielsweise ein mehrgängiges Spindelgewinde vorgesehen. Nach anderen Beispielen ist die Spindel als Kugelumlaufspindel oder als Gewinderollenspindel ausgebildet.

Nach einem weiteren Beispiel ist die Spindel zweiteilig ausgebildet. Die beiden Teile sind starr gekoppelt, beispielsweise verschraubt. Dadurch bedingt werden bei kleiner Bauhöhe der Armatur Torsionsspannungen von der Armaturenspindel ferngehalten und die Armaturenspindel kommt mit einem kleineren Durchmesser als sonst aus.

Die Antriebsvorrichtung weist beispielsweise einen Elektromotor auf, der über ein Getriebe direkt mit der Spindelmutter in Verbindung steht. Das Getriebe ist beispielsweise ein Schneckengetriebe, ein Stirnradgetriebe oder ein Planetengetriebe. Die Spindelmutter ist beispielsweise als Schneckenrad ausgebildet.

Der Elektromotor der Antriebsvorrichtung ist beispielsweise über ein Zeitglied zu steuern.

Mit der Erfindung wird insbesondere der Vorteil erzielt, daß eine Absperrarmatur bereitgestellt wird, die wegen ihrer geringen Bauhöhe besonders vorteilhaft in Kraftwerksanlagen einsetzbar ist. Darüber hinaus erzielt die Absperrarmatur nach der Erfindung einen guten Gesamtwirkungsgrad durch einen kleinen Reibungsanteil an der erforderlichen Antriebsleistung, ohne daß ein selbsttätiges Bewegen der Armaturenspindel möglich ist.

Die Erfindung wird anhand der Zeichnung näher erläutert:
- FIG 1: zeigt eine bisher bekannte zweiteilige Absperrarmatur.
- FIG 2: zeigt eine Absperrarmatur nach der Erfindung, durch die Antriebsvorrichtung und Absperrvorrichtung zu einem System vereinigt sind.
- FIG 3: zeigt als Teil einer erfindungsgemäßen Absperrarmatur eine Bremse.

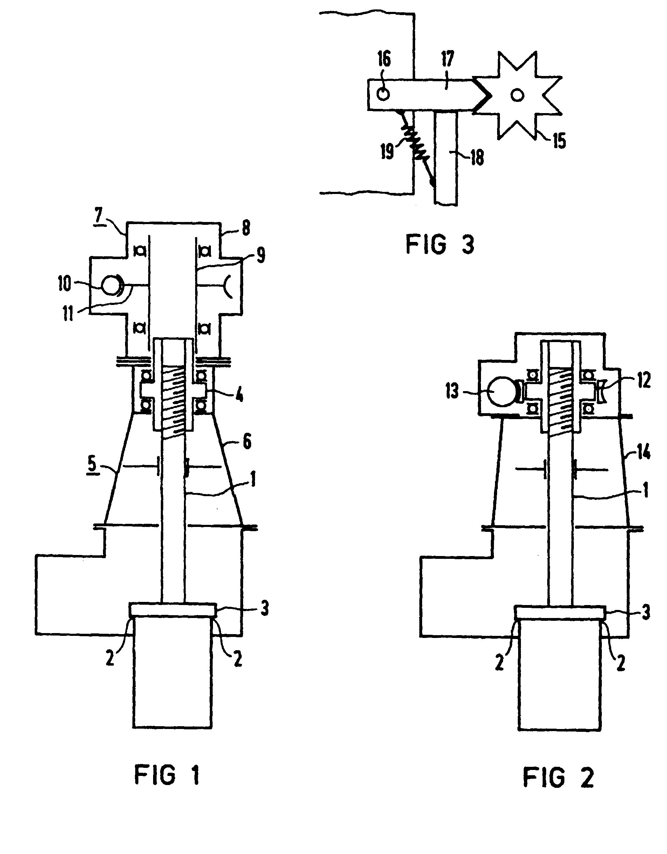

Eine Absperrarmatur nach den FIG 1 und 2 weist eine Spindel 1 auf, an die ein auf einen Sitz 2 aufsetzbarer Armaturenteller 3 angeformt ist. Mit der Spindel 1 steht eine Spindelmutter 4,12 in Eingriff, mit der eine Antriebsvorrichtung verbunden ist.

Bei einer bisher bekannten Absperrarmatur nach FIG 1 bildet eine Absperrvorrichtung 5, bestehend aus der Spindel 1 mit dem Armaturenteller 3 und der Spindelmutter 4 sowie einem Gehäuse 6 ein separates Bauteil. Auf die Absperrvorrichtung 5 ist eine gleichfalls separate Antriebsvorrichtung 7 aufgesetzt. Diese enthält in einem Gehäuse 8 eine Antriebsbuchse 9, die mit der Spindelmutter 4 koppelbar ist. Ein nicht dargestellter Elektromotor ist über eine Schnecke 10 und ein Schneckenrad 11 mit der Antriebsbuchse 9 verbunden. Die Antriebsvorrichtung 7 kann von der Absperrvorrichtung 5 abgenommen werden.

Bei der erfindungsgemäßen Absperrarmatur nach FIG 2 steht eine als Schneckenrad ausgebildete Spindelmutter 12 mit der Spindel 1 in Eingriff. Ein nicht dargestellter Elektromotor ist über eine Schnecke 13 gleich mit der Spindelmutter 12 verbunden. In der erfindungsgemäßen Absperrarmatur wird die Spindel 1 ohne Zwischenschaltung einer Antriebsbuchse angetrieben. Die Antriebsvorrichtung ist in die Absperrvorrichtung integriert. Beide befinden sich untrennbar in nur einem Gehäuse 14.

Eine Bremse für die Spindel 1 besteht nach FIG 3 aus einem mit der Spindelmutter 12 verbundenen Zahnrad 15. Zwischen Zähne des Zahnrades 15 eingreifend ist um einen Stift 16 drehbar eine Klinke 17 angeordnet. Ein fest installierter Block 18 verhindert eine Auslenkung der Klinke 17 in einer bestimmten Drehrichtung und damit auch eine Drehung des Zahnrad es 15 in einer bestimmten Drehrichtung.

Entgegengesetzt ist hingegen eine Auslenkung der Klinke 17 gegen eine durch eine Feder 19 bewirkte Rückstellkraft und damit eine Drehung des Zahnrades 15 stets möglich.

## Patentansprüche

1. Absperrarmatur mit einer Antriebsvorrichtung und mit einer mit einem Gewinde versehenen Spindel (1), an die ein auf einen Sitz (2) aufsetzbarer Armaturenteller (3) angeformt ist, wobei eine Spindelmutter (4,12) mit der Spindel (1) in Eingriff steht und die Antriebsvorrichtung mit der Spindelmutter (12) unmittelbar in Verbindung stehend angeordnet ist,
**dadurch gekennzeichnet,** daß das Gewinde der Spindel (1) eine große Steigung aufweist, derart daß keine Selbsthemmung vorliegt und daß an der Antriebsvorrichtung eine Bremse vorhanden ist, die selbsttätige Bewegungen der Spindel (1) in einer festgelegten Drehrichtung, aufgrund der fehlenden Selbsthemmung, verhindert, aber Bewegungen in der entgegengesetzten Drehrichtung zuläßt.

2. Absperrarmatur nach Anspruch 1,
**dadurch gekennzeichnet,** daß das Gewinde der Spindel (1) eine große Steigung aufweist, die größer als 5° ist.

3. Absperrarmatur nach Anspruch 1 oder 2,
**dadurch gekennzeichnet,** daß die Bremse aus einem Zahnrad (15), das mit der Spindelmutter (4,12) in Verbindung steht, und aus einer zwischen Zähne des Zahnrades (15) eingreifend angeordneten Klinke (17) besteht, wobei diese Klinke (17) gegen eine Rückstellkraft nur in einem festgelegten Drehsinn durch das Zahnrad (15) auslenkbar ist.

4. Absperrarmatur nach Anspruch 3,
**dadurch gekennzeichnet,** daß die Klinke (17) nur bei Überschreiten einer festgelegten Kraft auf die Klinke (17) auslenkbar ist.

5. Absperrarmatur nach einem der Ansprüche 1 bis 4,
**dadurch gekennzeichnet,** daß das Gewinde der Spindel (1) mehrgängig ist.

6. Absperrarmatur nach einem der Ansprüche 1 bis 5,
**dadurch gekennzeichnet,** daß die Spindel (1) zweiteilig ausgebildet ist und daß die beiden Teile starr gekoppelt sind.

7. Absperrarmatur nach einem der Ansprüche 1 bis 6,
**dadurch gekennzeichnet,** daß die Antriebsvorrichtung einen Elektromotor aufweist, der über ein Getriebe direkt mit der Spindelmutter (12) in Verbindung steht, wobei das Getriebe ein Schneckengetriebe (13) oder ein Stirnradgetriebe oder ein Planetengetriebe ist.

8. Absperrarmatur nach Anspruch 7,
**dadurch gekennzeichnet,** daß der Elektromotor über ein Zeitglied zu steuern ist.

## Claims

1. A shut-off valve having an operating arrangement and a valve rod (1) provided with a thread, on which valve rod a valve disc (3) mountable upon a seat (2) is pre-formed, with a valve rod nut (4, 12) being engaged with the valve rod (1) and the operating arrangement being arranged so as to communicate directly with the valve rod nut (12), characterised in that the thread of the valve rod (1) has a coarse pitch such that there is no self-locking and in that a brake is provided on the operating arrangement, which brake prevents self-movement of the valve rod (1) in a predetermined direction of rotation on account of the lack of self-locking, but permits movements in the opposite direction of rotation.

2. A shut-off valve according to claim 1, characterised in that the thread of the valve rod (1) has a coarse pitch which is greater than 5°.

3. A shut-off valve according to claim 1 or 2, characterised in that the brake comprises a toothed wheel (15) communicating with the valve rod nut (4, 12), and a pawl (17) arranged engaging between teeth of the toothed wheel (15), with it being possible for this pawl (17) to be deflected by the toothed wheel (15) against a restoring force in just one predetermined direction of rotation.

4. A shut-off valve according to claim 3, characterised in that the pawl (17) can be deflected only when a predetermined force on the pawl (17) is exceeded.

5. A shut-off valve according to one of claims 1 to 4, characterised in that the thread of the valve rod (1) is multi-threaded.

6. A shut-off valve according to one of claims 1 to 5, characterised in that the valve rod (1) is formed from two parts and in that the two parts are rigidly coupled.

7. A shut-off valve according to one of claims 1 to 6, characterised in that the operating arrangement has an electric motor which communicates directly with the valve rod nut (12) by way of a gear unit, with the gear unit being a worm gear unit (13) or a spur wheel gear unit or a planetary gear unit.

8. A shut-off valve according to claim 7, characterised in that the electric motor can be controlled by a timing element.

## Revendications

1. Robinet d'arrêt comportant un dispositif d'entraînement et une broche (1) filetée dont est issu un plateau (3) susceptible d'être appliqué sur un siège (2), un écrou (4,12) étant en prise avec la broche (1), tandis que le dispositif d'entraînement est disposé de manière à être en liaison directe avec l'écrou (12) de la broche,
caractérisé en ce que le filetage de la broche (1) a un grand pas de façon qu'il n'y ait pas d'autoblocage et il est prévu dans le dispositif d'entraînement un frein, qui empêche des déplacements d'elle-même de la broche (1) dans un sens de rotation fixé en raison de l'absence d'autoblocage mais qui permet des mouvements dans le sens de rotation inverse.

2. Robinet d'arrêt suivant la revendication 1,
caractérisé en ce que le filetage de la broche (1) a un grand pas qui est supérieur à 5°.

3. Robinet d'arrêt suivant la revendication 1 ou 2,
caractérisé en ce que le frein est constitué d'une roue dentée (15) qui est reliée à l'écrou (4,12) de la broche et d'un cliquet (17) monté de manière à pénétrer entre les dents de la roue dentée (15), ce cliquet (17) étant susceptible d'être écarté par la roue dentée (15), à l'encontre d'une force de rappel uniquement dans un sens de rotation fixé.

4. Robinet d'arrêt suivant la revendication 3,
caractérisé en ce que le cliquet (17) est susceptible d'être écarté uniquement lorsqu'une force, qui lui est appliqué, dépasse une valeur fixée.

5. Robinet d'arrêt suivant la revendication 1 à 4,
caractérisé en ce que le filetage de la broche (1) est à plusieurs pas.

6. Robinet d'arrêt suivant l'une des revendications 1 à 5,
caractérisé en ce que la broche (1) est en deux parties et que les deux parties sont couplées rigidement.

7. Robinet d'arrêt suivant l'une des revendications 1 à 6,
caractérisé en ce que le dispositif d'entraînement comporte un moteur électrique, qui est relié par l'intermédiaire d'une transmission directement à l'écrou de la broche (12), la transmission étant une transmission à vis sans fin (13) ou une transmission à roue dentée droite ou une transmission planétaire.

8. Robinet d'arrêt suivant la revendication 7,
caractérisé en ce que le moteur (1) électrique peut être commandé par l'intermédiaire d'un organe de temporisation.
